# EUROPEAN PATENT APPLICATION

(11) **EP 4 843 387 A1**
(43) Date of publication of application: **25.11.2026**
(21) Application number: 25382520.2
(22) Date of filing: 22.05.2025
(51) Int. Cl.: A01N 43/10, A01P 13/02

(54) **NOVEL COMBINATIONS FOR CROP PROTECTION**

(71) Applicant: Adama Agan Ltd., 7710201 Ashdod (IL)
(72) Inventor: SPERLING, Shani, 8532500 Beit Kama (IL); ESCRIBANO-VANACLOCHA, Juan A., 28002 Madrid (ES)
(74) Representative: Elion IP, S.L.

(57) **Abstract**

A combination comprising i) dimethenamid or salts thereof; ii) S-metolachlor or salts thereof; and iii) thiencarbazone or esters or salts thereof. The present application discloses formulations and tank mixtures comprising said combination, as well as weeding methods.

## Description

### FIELD OF INVENTION

The present invention relates to combinations of active ingredients comprising, dimethenamid or salts thereof, S-metolachlor or salts thereof and thiencarbazone or esters or salts thereof, and to methods of controlling weeds comprising applying said combinations.

### BACKGROUND OF INVENTION

The vulnerability of crops to weeds makes crop protection management one of the major components of the total crop production system. Various Insects and fungi along with the undesired weeds are very harmful to crop plants and can significantly reduce crop yields and qualities. Herbicides alone or in combination help minimize this damage by controlling threats to the crop. Many active ingredients either of the same class or having combinations of different classes are commercially available for these purposes.

Combinations of herbicides or mixtures of one or more herbicides with other active ingredients are typically used to broaden spectrum of control, to minimize the doses of chemicals used, to retard the development of resistance and to reduce the cost of the treatment through additive effect. Although many combinations of one herbicide agent with one or more active ingredients have been studied, a synergistic effect can be difficult to find.

Practical agricultural experience has shown that the repeated and exclusive application of an individual active ingredient in the control of a single weed leads in many cases to a selection of those weeds which have developed natural or adapted resistance against the active compound in question. Effective control of these weeds with the active ingredient in question is then no longer possible.

Therefore, there is a need for active ingredients that help prevent or overcome resistance. To reduce the risk of weeds becoming resistant to certain active compounds, combinations of different active ingredients are nowadays conventionally employed for controlling weeds. By combining judiciously active compounds having different mechanisms of action, it is possible to ensure successful control over a relatively long period of time.

Active agent combinations are described in the literature. However, the control over the weeds does not always satisfy the needs of agriculture practice. Additionally, the efficacy of the control provided by these combinations is not always satisfactory, or it can create additional toxicological and/or environmental effects. Random pesticidal formulations and combinations do not exert a satisfactory controlling effect in most of the cases, and therefore, there is an urgent need for the development of new pesticidal combinations having satisfactory controlling effects with more than one active ingredient.

It is an object of the present specification to provide combinations and formulations of judiciously selected active ingredients which have improved activity against harmful weeds. It is an object of the present specification to provide combinations and formulations that improve the overall performance in the control of weeds. It is a further object of the present specification to provide combinations and formulations that provide improved efficacy in the control of weeds. It is a further object of the present specification to provide combinations and formulations that provide improved efficacy in the control of weeds, while maintaining or reducing the phytoxicity on the desired crop.

### SUMMARY OF THE INVENTION

It is an endeavor of the present specification to find combinations that provide improved control of weeds. These improvements may come in the form of a synergistic efficacy among active ingredients, whether being applied simultaneously, that is jointly or separately, or in succession. That is, allowing better control of weeds than it is possible with the individual compounds alone. Improvements can also overcome at least one of the challenges in the prior art, for example, by reducing the dosage rate or by enhancing the spectrum of activity or by combining knock-down activity with prolonged control or by facilitating resistance management.

Considering the above, it is an object of the present specification to provide combinations of active ingredients that improve control of weeds.

It is an object of the present specification to provide a combination comprising
i) dimethenamid or salts thereof;
ii) S-metolachlor or salts thereof; and
iii) Thiencarbazone or esters or salts thereof.

The simultaneous (jointly or separately) application of dimethenamid or salts thereof, S-metolachlor or salts thereof and thiencarbazone or esters or salts thereof or their successive application allows enhanced efficacy, as proved in the examples below.

The present specification provides a combination, wherein the weight ratio of dimethenamid or salts thereof, S-metolachlor or salts thereof and thiencarbazone esters or salts thereof, is from 1:1:100 to about 50:200:1, calculated on an acid equivalent base, and the amount of each active ingredient is about 0.1-99 wt. %, about 0.1-95 wt. %, or about 0.1-90 wt. %, based on the total weight of the combination or the formulation (calculated on an acid equivalent base).

The present specification provides a combination comprising dimethenamid or salts thereof, S-metolachlor or salts thereof, or thiencarbazone or esters or salts thereof, as mentioned above, wherein the application rates of the combination according to the specification are from 1 g ae/ha to 2000 g ae/ha.

The present specification further provides a formulation comprising a mixture of dimethenamid or salts thereof, S-metolachlor or salts thereof, or thiencarbazone or esters or salts thereof, as mentioned above, and further comprising at least one agriculturally acceptable additive, for example, at least one selected from the group consisting of a solid carrier, a liquid carrier, a solvent, a pH modifier, a thickening agent, a sticking agent, a surfactant, an anti-oxidation agent, an anti-foaming agent, a thickener and mixtures thereof.

The present specification further provides a tank mixture comprising the combination or the formulation of the specification. The present specification further provides a method for the preparation of the tank mixture of the specification that comprises mixing dimethenamid or salts thereof, S-metolachlor or salts thereof; and thiencarbazone or esters or salts thereof with water;
or
mixing the formulation of the specification with water.

The present specification further provides a method for controlling weeds comprising contacting the weeds or their *locus* with an agriculturally effective amount of the combination, the formulation or the tank mixture of the specification.

The present specification further provides the use of the combination, of the formulation or the tank mixture of the specification for controlling weeds.

### DETAILED DESCRIPTION OF THE PRESENT INVENTION

### Definitions

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains.

As used herein, the term "active ingredient" includes, but is not limited to, herbicides, insecticides, and fungicides.

All numbers throughout this specification which refer to thiencarbazone, dimethenamid and S-metolachlor, and in general to all active ingredients and safeners, e.g., ratios and application rates, are calculated on an acid equivalent base of each one. The term "acid equivalent" (a.e.) refers to the amount of the acid form of an active ingredient that is equivalent to the amount of a salt or ester of the same active ingredient. For example, if the acid form of an active ingredient "Z" has a molecular weight of 100 Dalton, and the salt form of Z (ZM) has a molecular weight of 130 Dalton, an application of 130 g ai/ha of said salt of Z (ZM) would be equal to applying 100 g ae/ha of the acid form of Z: 130 g ai/ha Z salt * (100 Da Z acid / 130 Da Z salt) = 100 g ae/ha Z acid; it is thus said in this example that the acid equivalent of 130 g/ha of ZM are 100 g ae/ha.

As used herein, the term "herbicide" refers to an active ingredient capable of controlling unwanted plants or weeds, for example when growing in the *locus* of the desired crop.

As used herein, the terms "control" or "controlling" are meant to include, but are not limited to, any killing, growth regulating, inhibiting or interfering with the normal life cycle of a weeds.

As used herein, the term "effective" when used to describe a method for controlling, means that the method provides a good level of control of the undesired weeds without significantly interfering with the normal growth and development of the crop.

As used herein, the term "effective amount" when used in connection with an active ingredient or a combination of active ingredients refers to an amount thereof that, when ingested, contacted with or sensed, is sufficient to achieve a good level of control or activity without significantly harming the crop.

As used herein, the term "effective amount" when used in connection with a non-active component, i.e. an additive, such as a polymer or a carrier, refers to an amount of the additive that is sufficient to perform its function within the formulation.

As used herein, the term "agriculturally acceptable" means a substance which is known and accepted in the art for the formation of formulations for agricultural or horticultural use. Specifically, as used herein, the term "agriculturally acceptable additives" is defined as any substance that itself is not generally considered an active ingredient but is added to the formulation to improve its properties, such as one selected from the group consisting of a solid carrier, a liquid carrier, a solvent, a pH modifier, a thickening agent, a sticking agent, a surfactant, an anti-oxidation agent, an anti-foaming agent, a thickener and mixtures thereof. "Agriculturally acceptable" preferably refers to substances that are approved by a regulatory body for the use in agriculture.

As used herein, the term "adjuvant" is broadly defined as any substance that itself is not an active ingredient, but which enhances or is intended to enhance the effectiveness of the pesticide with which it is used. Adjuvants may be understood to include, but are not limited to, spreading agents, penetrants, compatibility agents, and drift retardants. They are typically added to tank mixtures prior to application in the field, although some ready mix formulations include built-in adjuvants.

As used herein, the term "ready mix formulation" or "ready mixture formulation", or simply "formulation", refers to a composition wherein the components are in relative high concetrations and is designed to be stable for long periods of time (at least one month). The ready mix formulations are designed to be mixed with water and form tank mixtures, which are shortly after applied. A ready mix formulation comprises one or more active ingredients.

The term "combination" refers to the combined use of each and all of the active ingredients defined in the combination of the specification, in this case, dimethenamid or salts thereof; S-metolachlor or salts thereof; and thiencarbazone or esters or salts thereof. Such combined use can be in the form of simultaneous application of the active ingredients of the combination of the specification, which may involve the use of a single formulation comprising all of the active ingredients of the combination of the specification. Alternatively, the simultaneous application can comprise the use of two or more formulations each comprising one or more active ingredients of the combination of the specification, such use typically being done by combining the formulations in a tank mix. Preferably, the combination of the specification comprises a single formulation in which all the active ingredients of the combination of the specification are mixed. Thus, according to a prefered embodiment, the combination of the specification is a mixture comprisig i) dimethenamid or salts thereof; ii) S-metolachlor or salts thereof; and iii) thiencarbazone or esters or salts thereof. Alternatively, the combination of the specification may involve the sequential application of the active ingredients. Different active ingredients that make the combination of the specification may be added at different times.

As used herein, the term "tank mix" or "tank mixture" refers to the mixture of two or more active ingredients or a ready mix formulation with water, which is then appliced to the field shortly after. Tank mixtures can therefore be formed by mixing one or more ready mix formulations (each comprising one or more active ingredients) with water. Alternatively, as mentioned above, tank mixtures may comprise the mixture of one or more ready mix formulations (each comprising one or more active ingredients) with one or more adjuvants. Thus, the stabilty requirements of tank mixtures are not as strict as those for formulations. Tank mixtures only require to be stable and in an appropriate form for application in the field for a period of time ranging from a few hours to a few days.

As used herein the term "crop plant" or "crop" makes reference to whole plants, plant organs (e.g. leaves, stems, twigs, roots, trunks, limbs, shoots, fruits etc.), plant cells, or plant seeds that have commercial interest. This term also encompasses plant crops such as fruits. The term "crop plant" or "crop" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes the habitat, breeding ground, propagation material, soil, area, material or environment in which a croop or a pest (e.g. a herbicide, a fungicide or an insecticide) is growing or may grow.

As used herein, the term "genetically modified plants", broadly known also "genetically modified organism" or "GMO", includes plants the DNA of which has been modified using genetic engineering methods, such as recombinant DNA techniques. Typically, one or more genes have been integrated into the genetic material of such a plant to improve certain properties of the plant, for example their resistance to certain pests or their nutritional properties.

As used herein, the term "herbicide-resistant" or "herbicide resistant" refers to an individual plant of a crop or a weed that survives a herbicide application that would kill a normal population of the same species. Such resistance can be naturally acquired or introduced through genetic engineering methods.

As used herein, the term "herbicide-tolerant" or "herbicide tolerant" refers to crops or weeds that survive and reproduce after herbicide treatment that would cause greater harm to a normal population of the same species. Such tolerance can be naturally acquired or introduced through genetic engineering methods.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising" when refering to the elements that make a feature to signify that the definition of such feature is open ended, meaning that the feature, in addition to the elements listed, may include additional ones. Other features use the term "consisting essentially of" or "consisting of" when defining the elements they are made of, to signify a closed definition in which the feature is made only of the elements listed.

As used herein the term "ha" refers to hectare.

As used herein, the term "g" refers to gram, and "L" or "I" refers to litre.

As used herein, the term "more effective" includes, but is not limited to, increasing efficacy of the pesticidal control, prolonging protection and reducing the amount of time needed to achieve a given level of pesticidal control, prolonging the duration of protection against weeds attack after application and extending the protection period against weeds attack and/or reducing the amount of time needed to achieve a level of weeds control compared to when each pesticide at the same amount is applied alone.

The term "improving plant quality" as used herein means that one or more traits are improved qualitatively or quantitatively in a plant to which the combination or formulation described herein has been applied as compared to the same trait in a control plant grown under the same conditions without the mixture or formulation described herein. Such traits include but are not limited to improved visual appearance and composition of the plant (i.e., improved color, density, uniformity, compactness), reduced ethylene (reduced production and/or inhibition of reception), improved visual appearance and composition of harvested material (i.e., seeds, fruits, leaves, vegetables, shoot/stem/cane), improved carbohydrate content (i.e., increased quantities of sugar and/or starch, improved sugar acid ratio, reduction of reducing sugars, increased rate of development of sugar), improved protein content, improved oil content and composition, improved nutritional value, reduction in anti-nutritional compounds, increased nutrient uptake, stronger and healthier roots, improved organoleptic properties *(i.e.,* improved taste), improved consumer health benefits *(i.e.,* increased levels of vitamins and antioxidants), improved post-harvest characteristics (i.e., enhanced shelf-life and/or storage stability, easier processability, easier extraction of compounds), and/or improved seed quality (i.e., for use in following seasons).

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic surfactants.

For purposes of better understanding the present teachings and in no way limiting the scope of the teachings, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

When a ratio herein is to be "X:1 or higher", it is meant that the ratio is Y:1, where Y is X or greater, and when a ratio is herein to be "X:1 or lower", it is meant that the ratio is Z:1, where Z is X or less. The same logic follows for ratios that are "1:X or higher" and "1:X or lower".

### Pesticidal Combinations

It has been surprisingly found that by combining dimethenamid or salts thereof, S-metolachlor or salts thereof and thiencarbazone or esters or salts thereof, combinations are produced that exhibit a broad spectrum of control and high efficacy against a very wide range of weeds, as well as having knock-down and long residual effect under different climate conditions. The combinations and formulations of the present specification are based in part on the finding that application of the combination of the present specification to a *locus* or area where weeds control is desired results in synergistic control thereof.

The combination described herein typically provides a higher herbicidal activity than that the sum of the activities of each of the herbicides when applied at the same rate. Such a combination allows the reduced dosages of the individual herbicides which can damage agriculturally important plants.

The weight ratio between dimethenamid or salts thereof, S-metolachlor or salts thereof and thiencarbazone or esters or salts thereof varies depending upon various conditions such as the type of the formulation, weather conditions, the type of crop and the type of pests. For example, the proportion dimethenamid:S-metolachlor:thiencarbazone can be from about 1:1:100 to about 50:200:1 or to about 40:100:1, calculated on acid equivalent base.

For example, the weight ratio dimethenamid:S-metolachlor is from about 1:100 to 100:1, for example, from about 1:50 to 50:1, calculated on an acid equivalent base. Typical proportions of dimethenamid:S-metolachlor are from about 1:25 to 25:1 or from about 1:10 to 10:1, for example from about 1:5 to 5:1, for example from about 1:4 to 1:1, calculated on an acid equivalent base. The weight ratio dimethenamid:S-metolachlor may be any in-between range selected from the above indicated ratios.

For example, the weight ratio dimethenamid:thiencarbazone is from about 1:100 to 100:1, for example, from about 1:40 to 50:1, calculated on an acid equivalent base. Typical proportions of dimethenamid:thiencarbazone are from about 1:15 to 25:1 or from about 1:1 to 20:1, for example from about 5:1 to 20:1, calculated on an acid equivalent base. The weight ratio dimethenamid:thiencarbazone may be any in-between range selected from the above indicated ratios.

For example, the weight ratio thiencarbazone:S-metolachlor is from about 1:100 to 50:1, for example, from about 1:70 to 20:1 calculated on an acid equivalent base. Typical proportions of thiencarbazone:S-metolachlor are from about 1:50 to 25:1 or from about 1:45 to 1:1, for example from about 1:45 to 1:10, calculated on an acid equivalent base. The weight ratio thiencarbazone:S-metolachlor may be any in-between range selected from the above indicated ratios.

Dimethenamid is a chloroacetamide inhibiting the synthesis of very long chain fatty acids used in the control of annual grasses, certain annual broadleaf weeds and sedges in field corn, seed corn, popcorn, soybeans, sweet corn, grain sorghum, dry beans and peanuts. It has one chiral center, of which the preferred form is the S-isomer (dimethenamid-P).

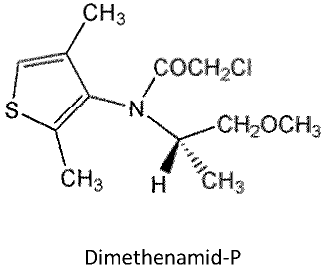

S-metholaclor is a chloroacetanilide inhibiting the synthesis of very long chain fatty acids used for the control of grasses. It has one chiral center, of which the preferred form is the S-isomer (S-metolachlor).

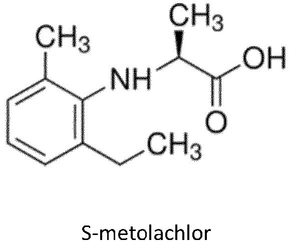

Thiencarbazone is a triazolinone inhibiting the acetolactate Synthase, used for the selective control of grasses and broadleaf weeds primarily in corn. The molecule contains one carboxylic acid moiety that can form esters. Thiencarbazone is most frequently commercialiced as its methyl ester (thiencarbazone-methyl).

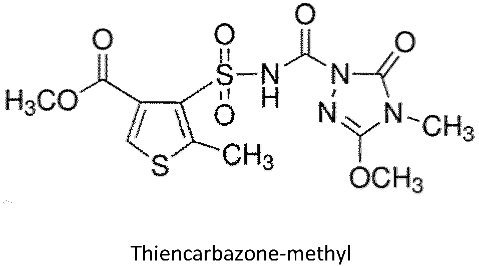

The combination of the specification can also incorporate safeners, which may include but are in no way limited to Daimuron (Dymron), Cumyluron , Dimepiperate, Fenclorim, Cloquintocet, (Cloquintocet-mexyl), Fenchlorazole-ethyl, Mefenpyr (Mefenpyr-diethyl), Isoxadifen (Isoxadifenethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil. In an embodiment the safener is selected from the group consisting of cyprosulfamide, Benoxacor, Dichlormid and Furilazole. In a further emboiment the safener is cyprosulfamide. Those skilled in the relevant field of art will immediately be aware of further safeners that may be employed without departing from the scope of the combination of the specification disclosed herein. Combinations of safeners can be employed in the methods and combinations disclosed herein.

### Application

The combination of the present specification may be applied one or more times during the planting process of the crop or at one or more stages of the crop development. For example, the combination of the specification can be applied in one or more moments selected from the group consisting of any time before the crop seeds are sowed (pre-sowing), or after they have been sowed (post-sowing), or before the seeds of the crop sprout (pre-emergence), or shortly after, e.g. 1 to 5 days, they sprout (early-post-emergence), or after, e.g. more than 5 days, they sprout (post-emergence). The combination may be applied via in furrow spray, foliar application, broadcast, basal application, soil application, soil incorporation or soil injection.

The combination of the specification can be added to a broad range of crops, for example, cereals such as corn, wheat or barley, or rice, or oilseed rape (OSR), soybean, cotton, sugar beet, or sunflower. The crops include herbicide, fungicide or insecticide resistant or tolerant crops.

The weeds that can be treated with the combination of the specification are, for example, Grassy weeds or dicotyledonous weeds. In an embodiment, the weed is selected from the group consisting of Asteraceae, Chenopodium album, Polygonaceae, Solanaceae, Echinochloa, Setaria, Poaceae, Cirsium arvense, Convolvulaceae, Datura, Caryophyllaceae, Stellaria, Xanthium, Digitaria, Sorghum, Lolium, Panicum, Poa, Agropyron, Abutilon, Hibiscup, Ambrosia, Matricaria, Euphorbiaceae, Geraniaceae, Brassicaceae, Poaceae, Cyperaceae, Malvaceae, Violaceae, Caryophyllaceae.

Alternatively, the combination can be applied in non-crop areas which include but are not limited to, commercial areas, residential areas, lawns, ornamental plants, shrubs, trees, parks, livestock areas, warehouses, food storage facilities, grain bins, turfgrass, pastures, grasslands, rangelands, fallow land, rights-of-way, golf courses, parks, along roadsides, power-lines, pipelines, railways, forests, well sites, and equipment yards.

The ratio of application of the combination of the specification varies depending upon different conditions such as the type of formulation, weather conditions, the type of crop, the desired effect, and the type of weeds. For example, the application rates of the combination of the specification may comprise from 1 g ae/ha to 1000 g ae/ha, for example from 500 g ae/ha to 1000 g ae/ha or from 1 g ae/ha to 500 g ae/ha of each of dimethenamid or salts thereof, S-metolachlor or salts thereof and thiencarbazone or esters or salts thereof.

For example, the combination of the specification may comprise a dimethenamid:S-Moc weight proportion comprised between 100:1 and 1:100, or between 20:1 to 1:20, calculated on an acid equivalent base, each being added at a rate of 1 to 1000 g ae/ha. For example, the weight ratio dimethenamid:thiencarbazone can be from about 1:100 to 100:1 or from about 1:15 to 25:1, calculated on an acid equivalent base, while each is added at a rate of 1 to 1000 g ae/ha. For example, the weight ratio thiencarbazone:S-metolachlor can be from about 1:100 to 50:1, for example, from about 1:50 to 25:1, calculated on an acid equivalent base, while each is added at a rate of 1 to 1000 g ae/ha.

Thiencarbazone or esters or salts thereof, or dimethenamid or salts thereof and the S-metolachlor or salts thereof can be applied simultaneously, that is jointly or separately, or in succession, in any order. For example, dimethenamid or salts thereof, S-metolachlor or salts thereof and thiencarbazone or esters or salts thereof can be added jointly or in succession. In one example, dimethenamid or salts thereof, S-metolachlor or salts thereof and thiencarbazone or esters or salts thereof are prepared separately, and the individual formulations are applied as is, or diluted to predetermined concentrations as tank mixtures. In another example, dimethenamid or salts thereof, S-metolachlor or salts thereof and thiencarbazone or esters or salts thereof are formulated together, and the formulation is applied as it is, or the formulation is diluted to a predetermined concentration as a tank mixture.

### Formulations

Thus, for example, dimethenamid or salts thereof, S-metolachlor or salts thereof and thiencarbazone or esters or salts thereof can be applied as a single ready-mix formulation, or as a tank mixture prepared from separate formulations of each separate active ingredient. It is preferred that the combination of dimethenamid or salts thereof, S-metolachlor or salts thereof and thiencarbazone or esters or salts thereof is in the form of a ready mix formulation. This ready mix formulation can be obtained by combining the active ingredients in an effective amount with an agriculturally acceptable carrier, a surfactant or other application-promoting adjuvant customarily employed in formulation technology.

The combination of the specification may comprise at least one additional component selected from the group of surfactants, solid diluents and liquid diluents. Such formulations can be formulated using agriculturally acceptable carriers, surfactants or other application-promoting adjuvants customarily employed in formulation technology and formulation techniques that are known in the art.

Examples of suitable solid carriers potentially useful in the present formulations include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable liquid carriers potentially useful in the present formulations include but are not limited to water; aromatic hydrocarbons such as alkylbenzenes and alkylnaphthalenes; alcohols such as cyclohexanol, and decanol; ethylene glycol; polypropylene glycol; dipropropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

The present formulationmay be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present formulations in order to increase the stability, density, and viscosity of the described formulations.

Aqueous use forms can be prepared from emulsion concentrates, suspensions, pastes, wettable powders or water-dispersible granules by adding water. To prepare emulsions, pastes or oil dispersions, the components of the formulations either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

Typically, the concentration of active ingredients in the formulation is about 0.1-99 wt. %, about 0.1-95 wt. %, or about 0.1-90 wt. %, based on the total weight of the formulation. For example, the concentration of active ingredients in the formulation is about 1-70 wt. %, based on the total weight of the formulation, for example about 1-50 wt. %, or about 1-40 wt. %, or about 1-30 wt. % or about 1-20 wt. %, based on the total weight of the formulation. For example, it is possible that the concentration of active ingredients in the formulation is about 1-10 wt. %, based on the total weight of the formulation. Thus, for example, the concentration of active ingredients in the formulation can be from about 0.1%, 0.5%, 1%, 1.5%, 2%, 2.5%, 3%, 3.5%, 4%, 4.5%, 5% to about 90%, 93%, 95%, 98%, 99% based on the total weight of the formulation. The remaining components in the formulation are for example the carrier and additives.

Alternatively, the present specification provides a kit comprising dimethenamid or salts thereof, S-metolachlor or salts thereof and thiencarbazone or esters or salts thereof. Such kits may comprise, in addition to the aforementioned active components, one or more additional active ingredients, either within the provided pesticidal formulation or separately.

As noted above, the formulations, kits and methods described herein exhibit a synergistic effect. A synergistic effect exists wherever the action of a combination of active components is greater than the sum of the action of each of the components alone. Therefore, a synergistically effective amount (or an effective amount of a synergistic formulation or combination) is an amount that exhibits greater pesticidal activity than the sum of the activities of the individual components.

The present specification provides a method for control of weeds by contacting the weed or their *locus* with an effective amount of the any one of the combinations or the formulations or tank mixtures disclosed herein so as to thereby control the weeds.

The following representative examples illustrate the practice of the present specification in some of its embodiments but should not be construed as limiting the scope of the specification. Other embodiments will be apparent to one skilled in the art from consideration of the specification and examples.

### REPRESENTATIVE EXAMPLES

A synergistic effect exists whenever the action of an active ingredient combination is greater than the sum of the actions of the individual components.

In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22.

The action expected for a given combination of two active components can be calculated as follows: $E = X + Y - XY / 100$ in which E represents the expected effect, e.g. percentage of pest control, for the combination of the active ingredients at defined doses (for example equal to x and y respectively), X is the effect, e.g. percentage of pest control, observed for compound (I) at a defined dose (equal to x), Y is the effect, e.g. percentage of pest control, observed for compound (II) at a defined dose (equal to y).

Here, efficacy or percent inhibition is determined in %. 0% means efficacy that corresponds to the Control, i.e., as if no treatment had been applied. Whereas a percent inhibition of 100% means that complete control is observed. When the percent control observed for the combination is greater than E, there is a synergistic effect. When the percent control observed for the combination is equal to E, there is an additive effect and wherein the percent control observed for the combination is lower than E, there is an antagonistic effect.

### Pot trial - Dimethenamid-P+Thiencarbazone-methyl+S-Metolachlor

**First trial:** Tank mixtures were prepared by combining each formulation with water to achieve the desired concentration of each active ingredient, as outlined in Table 1. For this study, individual pots were utilized for sowing the weeds, with each pot containing one weed species such as SORHA *(Sorghum halepense)* and ECHCG *(Echinochloa crus-galli*)*.* Treatments were then applied to each pot at the pre-emergence stage of the weeds, ensuring consistent application timing across all treatments. Subsequently, a comprehensive assessment was conducted between 13 and 32 days after application to evaluate the efficacy of each treatment on the weeds. The results obtained from this evaluation are summarized in Table 2.

**Table 1: Trial treatments**

| Treat # | Formulation | DMT ga.i. hectare | TCM ga.i. hectare | SMOC ga.i. hectare |
|---|---|---|---|---|
| 1 | Dimethenamid-P + Thiencarbazone-methyl OD | 50 | 3 | |
| 2 | S-Metolachlor EC | | | 72 |
| 3 | Dimethenamid-P+ Thiencarbazone-methyl OD + S-Metolachlor EC | 50 | 3 | 72 |

13 days or 32 days after application evaluation took place. As described in Table 2, the efficacy of Dimethenamid-P + Thiencarbazone-methyl on ECHCG was 40%, while the efficacy of S-Metolachlor on AMARE 60%. When Dimethenamid-P + Thiencarbazone- methyl and S-Metolachlor were mixed in a tank, observed efficacy was 90%. The expected (E) was 76% (Calculation in Table 2). In another observation at 32 DAA for SORHA, Dimethenamid-P + Thiencarbazone-methyl the efficacy on SORHA was 0%, while the efficacy of S-Metolachlor on SORHA was 55%. When Dimethenamid-P, Thiencarbazone-methyl and S-Metolachlor were mixed in a tank, the efficacy was 75%. The expected (E) is 55% (calculation in Table 2).

**Table 2: Colby calculation**

| | 13DAA ECHCG % | 32DAA SORHA |
|---|---|---|
| A (Dimethenamid-P + Thiencarbazone-methyl) | 40 | 0 |
| B (S-Metolachlor) | 60 | 55 |
| AB (Obs) | 90 | 75 |
| | | |
| E=(A+B) -(A*B)/100 | 76 | 55 |
| R = E/E0 | 1.184 | 1.363 |

The results clearly demonstrate that when Dimethenamid-P + Thiencarbazone-methyl and S-Metolachlor are combined (treatment 3, Table 1), they provide synergistic control over grass weeds (such as ECHCG, SORHA), as compared to using either active ingredient alone (treatments 1 or 2, Table 1).

**Second trial:** Tank mixes were prepared by combining each active ingredient with water to achieve the desired concentration of each active ingredient, as outlined in Table 3. For this study, individual pots were utilized for sowing the weeds, with each pot containing one weed species such as SORHA *(Sorghum halepense).* Treatments were then applied to each pot at the pre-emergence stage of the weeds, ensuring consistent application timing across all treatments. Subsequently, a comprehensive assessment was conducted between 20 days after application to evaluate the efficacy of each treatment on the weeds. The results obtained from this evaluation are summarized in Table 4.

**Table 3: Trial treatments**

| Treat # | Formulation | DMT ga.i. hectare | TCM ga.i. hectare | SMOC ga.i. hectare |
|---|---|---|---|---|
| 1 | Dimethenamid-P + Thiencarbazone-methyl OD | 100 | 6 | |
| 2 | S-Metolachlor EC | | | 216 |
| 3 | Dimethenamid-P+ Thiencarbazone-methyl OD+S-Metolachlor EC | 100 | 6 | 216 |

20 days after application efficacy was evaluated. As shown in table 4, the efficacy of Dimethenamid-P + Thiencarbazone-methyl on SORHA was 0%, while the efficacy of S-Metolachlor on SORHA 60%. When mixing Dimethenamid-P + Thiencarbazone- methyl and S-Metolachlor in a tank, the efficacy was 80%. The expected (E) of the mixture is 60% (calculation in Table 4).

**Table 4: Colby calculation**

| | 20DAA SORHA |
|---|---|
| A (Dimethenamid-P + Thiencarbazone-methyl) | 0 |
| B (S-Metolachlor) | 60 |
| AB (Obs) | 80 |
| | |
| E=(A+B) -(A*B)/100 | 60 |
| R = E/E0 | 1.333 |

The results clearly demonstrate that when Dimethenamid-P + Thiencarbazone-methyl and S-Metolachlor are mixed in a tank (treatment 3, Table 3), they provide synergistic control over grass weeds (such as SORHA), as compared to using either active ingredient alone (treatments 1 or 2, Table 3).

While the present disclosure may be susceptible to various modifications and alternative forms, specific embodiments have been described by way of example in detail herein. However, it is understood that the present disclosure is not intended to be limited to the particular forms disclosed. Rather, the present disclosure is to cover all modifications, equivalents, and alternatives falling within the scope of the present disclosure as defined by the following claims and their legal equivalents.

## Claims

1. A combination comprising:
i) dimethenamid or salts thereof;
ii) S-metolachlor or salts thereof; and
iii) thiencarbazone or esters or salts thereof.

2. The combination of claim 1, having a synergistic effect in the control of a weed.

3. The combination of any one of claims 1 or 2, wherein the weight ratio between dimethenamid or salts thereof (DMT), S-metolachlor or salts thereof (SMOC) and thiencarbazone or esters or salts thereof (TCM) is from about 1:1:100 to about 50:200:1. DMT:SMOC:TCM.

4. The combination of any one of claims 1-3, wherein the weight ratio between dimethenamid or salts thereof and S-metolachlor or salts thereof is from example from about 1:5 to 5:1 DMT:SMOC.

5. The combination of any one of claims 1-4, wherein the weight ratio between dimethenamid or salts thereof and thiencarbazone or esters or salts thereof is from from about 1:1 to 20:1 DMT:TCM.

6. The combination of any one of claims 1-5, wherein the weight ratio between thiencarbazone or esters or salts thereof and S-metolachlor or salts thereof is from from about 1:45 to 1:1 TCM:SMOC.

7. An agrochemical formulation comprising:
a) the combination as defined in any of claims 1-6; and
b) an agriculturally acceptable additive.

8. The agrochemical formulationof claim 7, wherein said agriculturally acceptable additive is selected from the group consisting of a solid carrier, a liquid carrier, a solvent, a pH modifier, a thickening agent, a sticking agent, a surfactant, an anti-oxidation agent, an anti-foaming agent, a thickener and mixtures thereof.

9. A tank mixture comprising the combination defined in any of claims 1 to 6 or the formulaltion defined in any of claims 7 or 8, and water.

10. A method for the preparation of the tank mixture defined in claim 9 that comprises mixing the combination defined in any of claims 1 to 6 with water;
or
mixing the formulation defined in any of claims 7 or 8 with water.

11. A method for controlling weeds comprising contacting the weeds or their *locus* with an agriculturally effective amount of the combination as defined in any of claims 1-6 or the formulation as defined in any of claims 7-8 or the tank mixture as defined claim 9.

12. The method of any of claim 11, wherein the dimethenamid or salts thereof, the S-metolachlor or salts thereof, and the thiencarbazone or esters or salts thereof are added jointly or in succession.

13. The method of any of claims 11 or 12, wherein the application rates of the sum of the active ingredients of the combination is from 1 g of ai/ha to 2000 g of ai/ha, calculated on an acid equivalent base.

14. Use of the combination as defined in any of claims 1-6 or the formulation as defined in any of claims 7 or 8 or the tank mixture as defined in claim 9 for controlling weeds.
